(19) Europäisches Patentamt

European Patent Office

Office européen des brevets

(11) **EP 1 227 131 B1**

(12) **FASCICULE DE BREVET EUROPEEN**

(45) Date de publication et mention
de la délivrance du brevet:
**15.03.2006 Bulletin 2006/11**

(51) Int Cl.:
***C08L 77/00*** *(2006.01)*     ***A63C 5/00*** *(2006.01)*
*C08L 77/00* *(2006.01)*     *C08L 77/00* *(2006.01)*
*C08L 77/00* *(2006.01)*

(21) Numéro de dépôt: **02290018.7**

(22) Date de dépôt: **07.01.2002**

(54) **Composition transparente à base de polyamide**

Transparente, Polyamid enthaltende Zusammensetzung

Transparent polyamide containing composition

(84) Etats contractants désignés:
**AT BE CH CY DE DK ES FI FR GB GR IE IT LI LU MC NL PT SE TR**

(30) Priorité: **26.01.2001 FR 0101114**

(43) Date de publication de la demande:
**31.07.2002 Bulletin 2002/31**

(73) Titulaire: **Arkema**
**92800 Puteaux (FR)**

(72) Inventeurs:
• **Montanari, Thibaut**
**27300 Bernay (FR)**

• **Recoquille, Christelle**
**27550 Nassandres (FR)**

(74) Mandataire: **Neel, Henry et al**
**ARKEMA**
**Département Propriété Industrielle**
**4-8, cours Michelet,**
**La Défense 10**
**92091 Paris La Défense Cedex (FR)**

(56) Documents cités:
**EP-A- 0 408 474**     **EP-A- 0 628 602**
**US-A- 4 404 317**     **US-A- 5 770 679**

## Description

La présente invention concerne une composition transparente à base de polyamide. La présente invention concerne aussi les objets obtenus à partir de cette composition. Les polyamides sont des polymères très utilisés pour leurs nombreuses propriétés. En effet les polyamides présentent certaines ou l'ensemble des propriétés énumérées ci-après : transparence, résistance aux chocs, à la traction et/ou la compression, tenue élevée aux agressions extérieures, telles que froid, chaleur, agents chimiques et rayonnements notamment UV. Aussi a-t-on vu apparaître des objets à base de polyamides, tels que par exemple des montures de lunettes, boîtiers divers, équipements pour automobile, matériel chirurgical, emballage, articles de sport et skis, en particulier le dessus du ski. Ces objets doivent le plus souvent porter des inscriptions diverses, comme les caractéristiques du produit vendu dans le cas d'un emballage réalisé en polyamide. Ces produits doivent aussi souvent être décorés.

Un exemple de produit devant être décoré est le ski, en particulier le dessus. On a donc naturellement cherché à décorer les polyamides selon les techniques habituellement utilisées et notamment celle par sublimation. Cette technique, dite de décoration par sublimation ou transfert thermique, consiste à recouvrir l'objet à décorer d'une couche de pigments à une température comprise entre 80 et 220°C, et à chauffer l'ensemble à une température donnée. Les pigments sont dits sublimables, mais cette technique est efficace avec des pigments qui peuvent migrer dans la structure du polymère. En fait, l'homme de l'art comprend ce terme de "décoration par sublimation" sans qu'il soit nécessaire de développer plus en détail ici. La température à laquelle on porte l'objet à décorer doit être suffisamment élevée, pour provoquer la sublimation ou transfert thermique des pigments, qui peuvent alors pénétrer, par diffusion, dans la structure du polymère, si celui-ci présente une morphologie adéquate. Le polymère doit bien sûr résister à la température utilisée lors de la décoration par sublimation.

[L'art antérieur et le problème technique]

Les polyamides de l'art antérieur ne présentent pas toujours les propriétés requises pour être décorés par sublimation. Si le polyamide est cristallin ou semi-cristallin, il résiste à des températures élevées et les conditions parfois sévères de mise en oeuvre de la décoration par sublimation peuvent être utilisées avec ce polyamide. Cependant, les polyamides cristallins ou semi-cristallins ne sont pas transparents et leur opacité les rend impropres à une utilisation lorsque la transparence est recherchée. Si le polyamide est amorphe, il est donc transparent et en raison de cette transparence pourrait convenir dans des applications où cette propriété de transparence est recherchée. Cependant, lorsque la température utilisée pour la sublimation est inférieure à la température de transition vitreuse, le polyamide ne présente pas une structure suffisamment désorganisée et les pigments sublimables diffusent difficilement dans la masse du polyamide. La couleur résultante est pâle et donc impropre à la commercialisation. Lorsque la température utilisée pour la sublimation est supérieure à la température de transition vitreuse, le polyamide se déforme de façon rédhibitoire et est donc impropre à l'usage auquel il est normalement destiné.

Les brevets FR-A-2 575 756 et FR-A-2 606 416 décrivent des compositions polyamides amorphes à base de BACM (bis-(4-aminocyclohexyl)-méthane), BAMCM (bis-(3-méthyl-4-aminocyclohexyl)-méthane), ou autres diamines cycloaliphatiques, d'acide iso- ou téréphtalique, et d'autres polyamides. Ces polyamides présentent des propriétés de transparence et sont utiles pour la fabrication d'objets moulés. Ce document décrit une température de moulage qui peut être aussi élevée que 310°C.

Les brevets JP-60-215053 et 60-215054 décrivent et revendiquent des alliages comprenant d'une part un polyamide transparent et d'autre part un polyamide cristallin. Le polyamide transparent est constitué de motifs aliphatiques en tant que composant monomère essentiel choisis parmi le lauryllactame, l'acide 12-aminododécanoïque ou 11-amino-undécanoïque, et des motifs cycliques. Les exemples donnés pour ces polyamides transparents font apparaître en tant que motifs cycliques une diamine cycloaliphatique, le bis-(4-aminocyclohexyl)-méthane et un diacide aromatique, l'acide isophtalique. Le polyamide cristallin est constitué de polyamide-12 et/ou -11, ou de copolyamide ayant comme monomère essentiel un motif 12 et/ou 11.

Le brevet FR-A-2 021 910 décrit des compositions de polyamides comprenant de 40 à 99% en poids d'un polyamide amorphe à base d'acides aromatiques et de 2,2,4- et/ou 2,4,4-triméthyl-hexaméthylène-diamine et 60 à 1% en poids d'un polyamide aliphatique. Les objets obtenus présentent une transparence, une bonne rigidité, sont résistants aux chocs et à l'eau. Les polyamides sont utilisés pour la fabrication par moulage d'objets creux tels que des bouteilles. Les températures utilisées sont des températures classiques.

Le brevet US-A-4 404 317 décrit des compositions de polyamides telles que 6,I/6,T/BACM,I/BACM,T qui présentent des propriétés utiles pour la fabrication d'objets. Ces polyamides sont obtenus par mélange à une température comprise entre 270 et 300°C. Les mélanges présentent, selon ce document, des propriétés de résistance aux solvants, de stabilité thermique, de conservation des propriétés mécaniques dans des conditions humides. US-A-4 404 317 décrit les conditions de mélange, telles que la température, pour divers polyamides; en particulier, il est recommandé de ne pas dépasser 300°C à cause de la dégradation du polyamide cristallin ainsi que du polyamide amorphe. Il est aussi connu que les polyamides cristallins (dont le PA-12 ou PA-6,12) présentent une température de dégradation de l'ordre de 270°C, tant pour le moulage-injection que pour l'extrusion. Cette température peut être portée pour des temps très courts ou en présence d'un stabilisant à une température d'environ 300°C.

Le brevet EP 628602 décrit des mélanges de polyamide amorphe et de polyamide semi cristallin. Les exemples ont été réalisés sur une extrudeuse bivis Werner 30 équipée d'un profil malaxeur, à une température matière de 330 à 340°C, à partir d'une part de polyamide semi-cristallin PA-11 de viscosité inhérente 1,38 dl/g et d'autre part de polyamide semi-aromatique amorphe PA-12/BMACM, TIBMACM,I. Celui-ci est synthétisé par polycondensation à l'état fondu à partir de bis-(3-méthyl-4-aminocyclohexyl)-méthane (BMACM), de lauryllactame (L12) et d'acides iso- et téréphtalique (IA et TA) dans un rapport molaire 1/1/0,3/0,7. Ce polyamide amorphe présente une température de transition vitreuse de 170°C et une viscosité inhérente de 1,05 dl/g. Les mélanges à la sortie de la filière de l'extrudeuse Werner sont refroidis sous forme de jonc dans un bac rempli d'eau froide, découpés en granulés et étuvés à 80°C sous vide pendant 12 heures de façon à éliminer l'humidité.

L'art antérieur a décrit soit des polyamides semi cristallins, soit des polyamides amorphes soit encore leurs mélanges. Les polyamides semi cristallins et les polyamides amorphes ne conviennent pas pour les objets devant être décorés par sublimation. Quant aux mélanges de polyamides semi cristallin et de polyamide amorphe, le polyamide amorphe contient toujours des motifs aromatiques, en général de l'acide isophtalique ou téréphtalique, ce qui oblige à utiliser des températures élevées pour leur mélange d'ou un risque de dégradation et un coût d'autant plus élevé que la température est élevée. De plus, ces polyamides à motifs aromatiques ont un module de flexion élevé et sont donc rigides et donc difficiles à mettre en oeuvre par exemple pour les disposer sur un ski au cours de la fabrication du ski.

On a maintenant trouvé une composition transparente à base de polyamide constituée essentiellement d'un mélange de polyamide aliphatique et d'un polyamide contenant des motifs cycloaliphatiques mais pas de motifs aromatiques.

[Brève description de l'invention]

La présente invention concerne une composition transparente comprenant en poids, le total étant 100%:

• 5 à 40% d'un polyamide amorphe (B) contenant des motifs cycloaliphatiques mais pas de motifs aromatiques qui résulte de la condensation:

> ➢ soit d'au moins une diamine choisie parmi les diamines cycloaliphatiques et les diamines aliphatiques et d'au moins un diacide choisi, parmi les diacides cycloaliphatiques et les diacides aliphatiques, l'un au moins de ces motifs diamines ou diacides étant cycloaliphatique,
> ➢ soit d'un acide alpha omega amino carboxylique cycloaliphatique,
> ➢ soit d'une combinaison de ces deux possibilités,
> ➢ et éventuellement d'au moins un monomère choisi parmi les acides alpha omega amino carboxyliques ou les éventuels lactames correspondants, les diacides aliphatiques et les diamines aliphatiques,

• 0 à 40% d'un polyamide souple (C) choisi parmi les copolymères à blocs polyamides et blocs polyéthers et les copolyamides,
• 0 à 20% d'un compatibilisant (D) de (A) et (B),
• 0 à 40% d'un modifiant souple (M),
• avec la condition que (C)+(D)+(M) est compris entre 0 et 50%,
• le complément à 100% d'un polyamide (A) semi cristallin.

Le terme "transparent" correspond à un coefficient de transmission lumineuse supérieur ou égal à 50 %, mesuré à 560 nm et pour une épaisseur de 2 mm. Préférentiellement il est >= 80%.

Le terme "polyamide" employé dans la présente description couvre aussi les copolyamides, pouvant contenir des tiers monomères en une proportion n'affectant pas les qualités essentielles des polyamides.

Le terme "semi-cristallin" couvre les (co)polyamides présentant à la fois une température de transition vitreuse Tg et une température de fusion Tf.

Le terme "amorphe" couvre des polyamides qui passent à l'état liquide ou fondu donc qui peuvent se mettre en oeuvre, au dessus de leur Tg. Ces polymères n'ont a priori pas de Tf en DSC. Toutefois il peuvent en avoir une mais son intensité est alors négligeable et n'affecte pas le caractère essentiellement amorphe du polymère.

Les définitions selon la présente invention sont conformes à celles communément acceptées dans l'art. On se référera avantageusement à la publication "ENPLAs, Booklet on Engineering Plastics", section 2.1, pp12-13, Ed.1991, et publiée par "The Japan Engineering Association". La composition de l'invention présente de nombreux avantages :

Elle est semi cristalline comme le polyamide (A) c'est à dire qu'on peut le décorer par sublimation; Les structures cristallines sont suffisamment petites pour que la composition soit transparente.

Elle n'est pas trop rigide comme les polyamides semi aromatiques de l'art antérieur. Son module de flexion peut être compris entre 1400 et 600 MPa, la mesure étant faite sur un échantillon conditionné 15 jours à 23°C et 50% RH (humidité relative). En effet le PA 11 a un module de flexion de 1000 MPa considéré comme moyen par comparaison avec un polyamide rigide de module de flexion de 2000 MPa et un polyamide souple de module de flexion de 500 MPa.

Elle est ductile, a une bonne tenue au choc, et à la fissuration ainsi qu'une bonne résistance à l'abrasion. Un objet tel qu'une feuille se prêtera bien aux diverses opérations de façonnage (formage à froid, emboutissage) qui peuvent être nécessaires pour obtenir un produit fini tel qu'un ski.

De plus elle a une faible sensibilité à l'humidité, essentiellement dans la mesure où, pour (A), les monomères employés ont au moins 9 atomes de carbone, par exemple: PA11, PA12, PA10.12, coPA10/9.12. Grâce à la nature semi-cristalline de (A), elle a une bonne tenue chimique et au stress cracking, ainsi qu'une bonne tenue au vieillissement.

Elle se fabrique facilement car la température à partir de laquelle il y a formation d'un matériau transparent est suffisamment basse pour être très proche et même identique, voir même inférieure, à la température usuelle de compoundage (malaxage à l'état fondu dans une extrudeuse ou un mélangeur) de (A). Typiquement cette température se situe aux environs de 270°C. Cette température est d'autant plus basse que la quantité de (D) est plus élevée. Dans l'art antérieur il faut compounder le polyamide aliphatique et le polyamide semi aromatique vers 310°C ou 340°C. L'avantage de cette température plus faible est qu'on peut produire ce nouveau matériau dans les conditions usuelles de compoundage, qu'il n'y a pas de dégradation, la composition ne jaunit pas, il n'y a pas ou peu de points noirs ni de gels et la composition est plus facilement recyclable (elle pourra subir plus facilement une nouvelle mise en oeuvre).

Elle se met en oeuvre, typiquement par extrusion, très aisément. Les propriétés du matériau fondu sont adéquates (viscosité suffisante) et stables (pas de fluctuation lors de la production de l'objet), il n'y a pas de fumées ni de dépôt, contrairement à certaines compositions polyamide transparentes de l'art antérieur.

L'invention concerne aussi les objets constitués de la composition de l'invention tels que les plaques, les films, les feuilles, les tubes, les profilés, les objets obtenus par injection et en particulier les films et les feuilles qu'on colle ensuite sur les skis.

L'invention concerne aussi les objets précédents décorés, par exemple par sublimation, et recouverts d'une couche de protection transparente constituée de la composition de l'invention.

[Description détaillée de l'invention]

**S'agissant du polyamide (A) semi cristallin** on peut citer (i) les polyamide aliphatiques qui sont les produits de condensation d'un acide alpha omega amino carboxylique aliphatique, d'un lactame ou les produits de condensation d'une diamine aliphatique et d'un diacide aliphatique et (ii) les autres polyamides pourvu qu'ils soient semi cristallins. Parmi ces autres polyamides semi cristallins on préfère ceux qui ont des structures cristallines suffisamment petites pour être proches de la transparence, à titre d'exemple on peut citer le PA PACM-12 dans lequel PACM désigne le para amino dicyclohexylméthane et 12 le diacide en C 12.

A titre d'exemple d'acide alpha omega amino carboxylique aliphatique on peut citer les acides aminocaproïques, amino-7-heptanoïque, amino-11-undécanoïque et amino-12-dodécanoïque. A titre d'exemple de lactame on peut citer le caprolactame, l'oenantholactame et le lauryllactame. A titre d'exemple de diamines aliphatiques on peut citer l'hexaméthylènediamine, la dodécaméthylènediamine et la triméthylhexaméthylène diamine. A titre d'exemple de diacides aliphatiques on peut citer les acides adipique, azélaïque, subérique, sébacique et dodécanedicarboxylique.

Parmi les polyamides aliphatiques, on peut citer, à titre d'exemple et de façon non limitative, les polyamides suivants: polycaprolactame (PA-6); polyundécanamide (PA11); polylauryllactame (PA-12); polybutylène adipamide (PA-4,6); polyhexaméthylène adipamide (PA-6,6); polyhexaméthylène azélamide (PA-6,9); polyhexaméthylène sébaçamide (PA-6,10); polyhexaméthylène dodécanamide (PA-6,12); polydécaméthylène dodécanamide (PA-10,12); polydécaméthylène sébaçanamide (PA-10,10) et le polydodécaméthylène dodécanamide (PA-12,12).

Avantageusement (A) provient de la condensation d'un lactame ayant au moins 9 atomes de carbone, d'un acide alpha oméga amino carboxylique ayant au moins 9 atomes de carbone ou d'une diamine et d'un diacide tels que la diamine ou le diacide ont au moins 9 atomes de carbone. Avantageusement (A) est le PA 11 et le PA 12, et de préférence le PA 12. On ne sortirait pas du cadre de l'invention si (A) était un mélange de polyamides aliphatiques.

Selon une autre forme avantageuse, (A) est un polyamide equilibré. On rappelle ci dessous les appellations des polyamides selon leurs extrémités.

Les polyamides selon leur procédé de fabrication et /ou le limiteur de chaîne utilisé peuvent avoir des excès de terminaisons acides, amines ou même avoir une part de terminaisons alkyles ou autres par exemple aryle ou tout autre fonction, découlant de la structure du limiteur choisi. L'excès de terminaisons acides provient d'un limiteur de chaîne diacide, L'excès de terminaisons amines provient d'un limiteur de chaîne diamine. Un limiteur de chaîne amine primaire conduit à une chaîne polyamide ayant une extrémité alkyle et une extrémité amine.

Nous appelons polyamide diamine, PAdiNH2, un polyamide qui répond aux critères suivants :

* possède une certaine quantité de chaînes terminées de part et d'autre par un groupement amine (NH2)
* la quantité de chaînes terminées de part et d'autre par un groupement amine (NH2) est supérieure à celle des chaînes diacide (s'il y en a)
* la concentration en groupes amine est globalement supérieure à la concentration en groupes acide.
* un PAdiNH2 est obtenu en ajoutant une diamine comme limiteur de chaîne ou, dans le cas des polyamides à base de diamine et de diacide tel que par exemple le PA6-6, en ajoutant plus de comonomère diamine que de comonomère diacide.

Ces polyamides sont donc aussi appelés par simplification PA diamine ou PAdiNH2.

Un polyamide est appelé diacide pour les raisons opposées.

Un polyamide est équilibré si

* on n'a pas rajouté de limiteur ou d'excès d'un des comonomères
* si la concentration en amine et en acide est essentiellement équivalente.

Pour déterminer la nature des extrémités d'un polyamide et du pourcentage de chaînes ayant ces terminaisons on peut utiliser les méthodes connues de détermination des masses molaires telles que par exemple la SEC (Steric Exclusion chromatography) et les méthodes de dosage des fonctions amines et acides. Dans la présente demande le terme SEC désigne la mesure des masses moléculaires de polymères par chromatographie d'exclusion stérique, cette technique et plus particulièrement son application aux polyamides et aux polyamides blocs polyéthers est décrite dans "Journal of Liquid Chromatography, 11(16), 3305-3319 (1988)". Quant à la détermination des terminaisons, par exemple pour le PA 6, on dissout l'échantillon dans une solution de phénol dans le méthanol et on titre les amines à l'aide d'une solution d'acide paratoluènesulphonique dans le méthanol. Pour les extrémités acides, toujours pour le PA 6, on dissout l'échantillon dans l'alcool benzylique et on titre les fonctions acides à l'aide d'une solution de potasse dans l'alcool benzylique.

**S'agissant du polyamide amorphe à motif cycloaliphatique (B)** les diamines cycloaliphatiques peuvent être les isomères des bis-(4-aminocyclohexyl)-méthane (BACM), bis-(3-méthyl-4-aminocyclohexyl)méthane (BMACM), et 2-2-bis-(3-méthyl-4-aminocyclohexyl)-propane(BMACP), et para-amino-di-cyclo-hexyl-méthane (PACM). Les autres diamines couramment utilisées peuvent être l'isophoronediamine (IPDA) et la 2,6-bis-(aminométhyl)-norbornane (BAMN). Les diacides aliphatiques ont été cités plus haut. A titre d'exemple on peut citer le PA-IPDA,12 résultant de la condensation de l'isophorone diamine avec l'acide dodécanedicarboxylique. Le polyamide amorphe (B) peut contenir éventuellement au moins un monomère ou comonomère choisi parmi :

les acides alpha oméga amino carboxyliques,
les diacides aliphatiques,
les diamines aliphatiques,

ces produits ont été décrits plus haut. A titre d'exemple de (B) on peut citer le PA-IPDA,10, le coPA-IPDA,10/12, le PA-IPDA,12. On ne sortirait pas du cadre de l'invention si (B) était un mélange de plusieurs polyamides amorphes.

**S'agissant du polyamide souple (C) et d'abord les copolymères à blocs polyamides et blocs polyéthers** Ils résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides. Les copolymères (C) sont avantageusement de ce type.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

La masse molaire en nombre $\overline{M_n}$ des séquences polyamides est comprise entre 300 et 15 000 et de préférence entre 600 et 5 000. La masse $\overline{Mn}$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 250° C pour une concentration initiale de 0,8 g/100 ml. Les MFI peuvent être compris entre 5 et 50 (235°C sous une charge de 1 kg)

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441. US 4 864 014, US 4 230 838 et US 4 332 920.

On peut distinguer trois types de copolymères à blocs polyamides et polyéthers. Selon un premier type les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne. A titre d'exemple d'acides alpha oméga aminocarboxyliques on peut citer l'acide aminoundécanoïque, à titre d'exemple de lactame on peut citer le caprolactame et le lauryllactame, à titre d'exemple de diacide carboxylique on peut citer l'acide adipique, l'acide décanedioïque et l'acide dodécanedioïque, à titre d'exemple de diamine on peut citer l'hexaméthylène diamine. Avantageusement les blocs polyamides sont en polyamide 12 ou en polyamide 6.

Selon une deuxième type les séquences polyamides résultent de la condensation d'un ou plusieurs acides alpha oméga aminocarboxyliques et/ou d'un ou plusieurs lactames ayant de 6 à 12 atomes de carbone en présence d'un diacide carboxylique ayant de 4 à 12 atomes de carbone et sont de faible masse c'est-à-dire $\overline{Mn}$ de 400 à 1000. A titre d'exemple d'acide alpha oméga aminocarboxylique on peut citer l'acide aminoundécanoïque et l'acide aminododécanoïque. A titre d'exemple d'acide dicarboxylique on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanedioïque $HOOC-(CH_2)_{10}-COOH$. A titre d'exemple de lactame on peut citer le caprolactame et le lauryllactame. Des séquences polyamides obtenues par condensation du lauryllactame en présence d'acide adipique ou d'acide dodécanedioïque et de masse $\overline{Mn}$ 750 ont une température de fusion de 127 - 130°C.

Selon un troisième type les séquences polyamides résultent de la condensation d'au moins un acide alpha oméga aminocarboxylique (ou un lactame), au moins une diamine et au moins un diacide carboxylique. L'acide alpha oméga aminocarboxylique, le lactame et le diacide carboxylique peuvent être choisis parmi ceux cités plus haut. La diamine peut être une diamine aliphatique ayant de 6 à 12 atomes, elle peut être arylique et/ou cyclique saturé. A titre d'exemples on peut citer l'hexaméthylènediamine, la pipérazine, l'1-aminoéthylpipérazine, la bisaminopropylpipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyle pentaméthylènediamine (MPDM), la bis(aminocyclohexyl) méthane (BACM), la bis(3-méthyl-4 aminocyclohexyl) méthane (BMACM).

Dans les deuxième et troisième types les différents constituants de la séquence polyamide et leur proportion sont choisis pour obtenir une température de fusion inférieure à 150°C et avantageusement comprise entre 90 et 135°C.

Des copolyamides à basse température de fusion sont décrits dans les brevets US 4 483 975, DE 3 730 504, US 5 459 230 dans lesquels on reprend les mêmes proportions des constituants pour les blocs polyamides.

Les blocs polyéthers peuvent représenter 5 à 85 % en poids du copolymère à blocs polyamides et polyéthers. Les blocs polyéthers peuvent contenir d'autres motifs que les motifs oxyde d'éthylène tels que par exemple de l'oxyde de propylène ou du polytétrahydrofurane (qui conduit aux enchaînements polytétraméthylène glycol). On peut aussi utiliser simultanément des blocs PEG c'est à dire ceux constitués de motifs oxyde d'éthylène, des blocs PPG c'est à dire ceux constitués de motifs oxyde de propylène et des blocs PTMG c'est à dire ceux constitués de motifs tétraméthylène glycol appelés aussi polytétrahydrofurane. On utilise avantageusement des blocs PPG ou PTMG. La quantité de blocs polyéthers dans ces copolymères à blocs polyamides et polyéthers est avantageusement de 10 à 50% en poids du copolymère et de préférence de 35 à 50%.

Les copolymères à blocs polyamides et blocs polyéthers peuvent être préparés par tout moyen permettant d'accrocher les blocs polyamide et les blocs polyéthers. En pratique on utilise essentiellement deux procédés l'un dit en 2 étapes, l'autre en une étape.

Le procédé en 2 étapes consiste d'abord à préparer les blocs polyamides à extrémités carboxyliques par condensation des précurseurs de polyamide en présence d'un diacide carboxylique limiteur de chaîne puis dans une deuxième étape à ajouter le polyéther et un catalyseur.

Le polyamide à extrémités acide carboxylique ayant été préparé on ajoute ensuite le polyéther et un catalyseur. On peut ajouter le polyéther en une ou plusieurs fois, de même pour le catalyseur.

Le catalyseur est défini comme étant tout produit permettant de faciliter la liaison des blocs polyamides et des blocs polyéthers par estérification. Le catalyseur est avantageusement un dérivé d'un métal (M) choisi dans le groupe formé par le titane, le zirconium et le hafnium.

Ce procédé et ces catalyseurs sont décrits dans les brevets US 4,332,920, US 4,230,838, US 4,331,786, US 4,252,920, JP 07145368A, JP 06287547A, et EP 613919.

S'agissant du procédé en une étape on mélange tous les réactifs utilisés dans le procédé en deux étapes c'est-à-dire les précurseurs de polyamide, le diacide carboxylique limiteur de chaîne, le polyéther et le catalyseur. Il s'agit des mêmes réactifs et du même catalyseur que dans le procédé en deux étapes décrit plus haut. Si les précurseurs de polyamide ne sont que des lactames il est avantageux d'ajouter un peu d'eau.

Le copolymère a essentiellement les mêmes blocs polyéthers, les mêmes blocs polyamides, mais aussi une faible partie des différents réactifs ayant réagi de façon aléatoire qui sont répartis de façon statistique le long de la chaîne polymère.

Avantageusement, (C) sera choisi de tel sorte qu'il permette "en prime" de mettre moins de (B) pour obtenir une composition transparente.

**S'agissant du polyamide souple (C) constitué de copolyamide** il résulte soit de la condensation d'au moins un acide alpha oméga aminocarboxylique (ou un lactame), au moins une diamine et au moins un diacide carboxylique soit de la condensation d'au moins deux acides alpha oméga aminocarboxyliques (ou leurs lactames correspondants eventuels ou d'un lactame et de l'autre sous forme acide alpha oméga aminocarboxylique). Ces constituants ont déjà été définis plus haut.

A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 uridécanoïque, d'acide adipique et d'hexaméthylène diamine (PA 6/6-6/11/12), des copolymères de lauryle lactame, d'acide azélaïque et d'hexaméthylène diamine (PA 6-9/12). Les copolyamides préférés sont des copolyamides avec un caractère copolymère marqué, c'est à dire avec des proportions essentiellement équivalentes des différents comonomères, ce qui conduit aux propriétés les plus éloignés des homopolymères polyamides correspondants. On ne sortirait pas du cadre de l'invention si (C) était un mélange de plusieurs copolymères à blocs polyamides et blocs polyéthers ou de plusieurs copolyamides ou toutes combinaison de ces possibilités.

**S'agissant du compatibilisant (D) de (A) et (B)** c'est tout produit qui fait baisser la température nécessaire pour rendre le mélange de (A) et (B) transparent. Avantageusement c'est un polyamide. Par exemple si (A) est le PA 12 alors (D) est le PA 11. De préférence c'est un polyamide aliphatique catalysé.

S'agissant du polyamide (D) catalysé c'est un polyamide comme décrit plus haut pour (A) mais contenant un catalyseur de polycondensation tel qu'un acide minéral ou organique, par exemple de l'acide phosphorique. Le catalyseur peut être ajouté dans le polyamide (D) après sa préparation par un procédé quelconque ou, tout simplement et c'est ce que l'on préfère, être le reste du catalyseur utilisé pour sa préparation. "Polyamide catalysé" veut dire que la chimie va se poursuivre au delà des étapes de synthèse de la résine de base et donc au cours des étapes ultérieures de la préparation des compositions de l'invention. Des réactions de polymérisation et/ou dépolymerisation pourront avoir très substantiellement lieu au cours du mélange des polyamides (A) et (B) et (D) pour préparer les compositions de la présente invention. Typiquement, la demanderesse pense (sans être liée par cette explication) que l'on continue à polymériser (allongement de chaîne) et à brancher les chaînes (par exemple pontage par le biais de l'acide phosphorique). De plus ceci peut être considéré comme une tendance au rééquilibrage de l'équilibre de polymérisation, donc une sorte d'homogénéisation. Il est cependant recommandé de bien sécher (et avantageusement de bien maîtriser les niveaux d'humidité) les polyamides pour éviter des dépolymerisations. La quantité de catalyseur peut être comprise entre 5 ppm et 15000 ppmd'acide phosphorique par rapport à la résine (D). Pour d'autres catalyseurs, par exemple l'acide borique, les teneurs seront différentes et peuvent être choisies de façon appropriée selon les techniques habituelles de la polycondensation des polyamides.

**S'agissant du modifiant souple (M)** à titre d'exemple on peut citer les polyoléfines fonctionnalisées, les polyesters aliphatiques greffés, les copolymères à blocs polyéthers et blocs polyamides éventuellement greffés, les copolymères de l'éthylène et d'un (méth)acrylate d'alkyle et/ou d'un ester vinylique d'acide carboxylique saturé. Les copolymères à blocs polyéthers et blocs polyamides peuvent être choisis parmi ceux qu'on a cités plus haut pour (C), on choisit plutôt des copolymères souples c'est à dire ayant un module de flexion inférieur à 200 MPa.

Le modifiant peut être aussi une chaîne de polyoléfine ayant des greffons polyamide ou oligomères de polyamide ; ainsi il a des affinités avec les polyoléfines et les polyamides.

Le modifiant souple peut être aussi un copolymère à blocs ayant au moins un bloc compatible avec (A) et au moins un bloc compatible avec (B).

La polyoléfine fonctionnalisée est un polymère comprenant des motifs alpha oléfine et des motifs époxyde ou acide carboxylique ou anhydride d'acide carboxylique.

A titre d'exemple, on peut citer les polyoléfines ou encore les polymères blocs SBS, SIS, SEBS, EPR (appelé aussi EPM) ou EPDM greffés par des époxydes insaturés tels que le (méthl)acrylate de glycidyle, ou par des acides carboxyliques tels que l'acide (méthl)acrylique ou encore par des anhydrides d'acides carboxyliques insaturés tels que l'anhydride maléique. EPR désigne les élastomères éthylène-polypropylène et EPDM les élastomères éthylène-polypropylène-diène.

On entend par polyoléfine un polymère comprenant des motifs oléfines tels que par exemple des motifs éthylène, propylène, butène-1, ou tout autre alpha oléfine. A titre d'exemple, on peut citer :

- les polyéthylènes tels que les LDPE, HDPE, LLDPE ou VLDPE, le polypropylène, les copolymères éthylène / propylène, ou encore les PE métallocènes ;
- les copolymères de l'éthylène avec au moins un produit choisi parmi les sels ou les esters d'acides carboxyliques insaturés, ou les esters vinyliques d'acides carboxyliques saturés.

Avantageusement, la polyoléfine est choisie parmi le LLDPE, le VLDPE, le polypropylène, les copolymères éthylène / acétate de vinyle ou les copolymères éthylène / (méth|)acrylate d'alkyle. La densité peut être avantageusement comprise entre 0,86 et 0,965, le Melt Flow Index (MFI) peut être compris entre 0,3 et 40.

A titre d'exemple de modifiant souple on peut encore citer :

- les copolymères de l'éthylène, d'un époxyde insaturé et éventuellement d'un ester ou un sel d'acide carboxylique insaturé ou d'un ester vinylique d'acide carboxylique saturé. Ce sont par exemple les copolymères éthylène / acétate de vinyle / (méth)acrylate de glycidyle ou les copolymères éthylène / (méth)acrylate d'alkyle / (méth)acrylate de glycidyle.
- les copolymères de l'éthylène d'un anhydride d'acide carboxylique insaturé et/ou d'un acide carboxylique insaturé pouvant être partiellement neutralisé par un métal (Zn) ou un alcalin (Li) et éventuellement d'un ester d'acide carboxylique insaturé ou d'un ester vinylique d'acide carboxylique saturé. Ce sont par exemple les copolymères éthylène / acétate de vinyle / anhydride maléique ou les copolymères éthylène / (méth)acrylate d'alkyle / anhydride maléique ou encore les copolymères éthylène / (méth)acrylate de Zn ou Li / anhydride maléique.
- le polyéthylène, le polypropylène, les copolymères éthylène propylène greffés ou copolymérisés avec un anhydride d'acide carboxylique insaturé puis condensés avec un polyamide (ou un oligomère de polyamide) monoaminé. Ces produits sont décrits dans EP 342 066.

Avantageusement, la polyoléfine fonctionnalisée est choisie parmi les copolymères éthylène / (méth)acrylate d'alkyle / anhydride maléique, seuls ou en mélange avec des copolymères de l'éthyléne et d'un (méth)acrylate d'alkyle, les copolymères éthylène / acétate de vinyle / anhydride maléique, les copolymères éthylène propylène majoritaires en propylène greffés par de l'anhydride maléique puis condensés avec du polyamide 6 monoaminé ou des oligomères mono aminés du caprolactame.

De préférence, c'est un copolymère éthylène / (méth)acrylate d'alkyle / anhydride maléique comprenant jusqu'à 40% en poids de (méth)acrylate d'alkyle et jusqu'à 10% en poids d'anhydride maléique. Le (méth)acrylate d'alkyle peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

A titre de polyesters aliphatiques greffés on peut citer la polycaprolactone greffée par de l'anhydride maléique, du méthacrylate de glycidyle, des esters vinyliques ou du styrène. Ces produits sont décrits dans la demande EP 711 791.

Il est recommandé de choisir un modifiant souple qui ne réduit pas la transparence de la composition. L'intérêt des compositions (A) + (B), (A) + (B) + (C), (A) + (B) + (C) + (D) précédemment mentionnées est qu'elles ont un indice de réfraction résultant proche de la majorité des modifiants (M) mentionnés. Il est donc possible de rajouter un modifiant (M) de même (ou très proche) indice de réfraction. Ce n'était pas le cas avec les compositions polyamides transparentes citées dans l'art antérieur car leurs indices de réfraction sont typiquement plus élevés que l'indice de réfraction des modifiant (M) les plus usuels.

D'une manière générale le modifiant (M) est utile pour assouplir encore plus ou conférer une propriétés particulière (d'ou son nom de modifiant) sans pour autant que l'on perde les propriétés avantageuses de transparence, de fabrication à basse T° et d'aptitude à la sublimation. Parmi ces propriétés supplémentaires que peut apporter le modifiant, citons : modifiant choc pour améliorer la tenue au choc, modifiant porteur de fonctions réactives pour améliorer l'adhésion du matériau sur les substrats, modifiant pour donner un aspect mat, modifiant pour donner un toucher soyeux ou glissant, modifiant pour rendre plus visqueux le matériau afin de le mettre en oeuvre par soufflage.

Il est avantageux de mélanger les modifiants afin de combiner leurs effets.

Des compositions avantageuses sont celles dont les proportions des constituants sont les suivantes (le total étant 100%) et sont décrites dans le tableau 1 suivant :

Tableau 1

| A | B | C+D+M | C | D | M |
|---|---|---|---|---|---|
| complément à 100% | 5 à 40 | 0 à 50 | 0 à 40 | 0 à 20 | 0 à 40 |
| complément à 100% | 20 à 30 | 0 à 50 | 0 à 40 | 0 à 20 | 0 à 40 |
| complément à 100% | 5 à 40 | 0 à 30 | 0 à 30 | 0 à 20 | 0 à 30 |
| complément à 100% | 10 à 30 | 0 à 30 | 0 à 30 | 0 à 20 | 0 à 30 |
| complément à 100% | 20 à 30 | 0 à 30 | 0 à 30 | 0 à 20 | 0 à 30 |
| complément à 100% | 10 à 30 | 0 à 20 | 0 à 20 | 0 à 20 | 0 à 20 |
| complément à 100% | 10 à 30 | 5 à 15 | 0 à 15 | 0 à 15 | 0 à 15 |
| complément à 100% | 20 à 30 | 0 à 20 | 0 à 20 | 0 à 20 | 0 à 20 |
| complément à 100% | 20 à 30 | 5 à 15 | 0 à 15 | 0 à 15 | 0 à 15 |

Les compositions de l'invention sont fabriquées par mélange à l'état fondu des différents constituants (extrudeuses bivis, BUSS®, monovis) selon les techniques habituelles des thermoplastiques. Les compositions peuvent être granulées en vue d'une utilisation ultérieure (il suffit de les refondre) ou bien de suite injectées dans un moule ou un dispositif d'extrusion ou de coextrusion pour fabriquer des tubes, des plaques, des films ou des profilés. L'homme du métier peut ajuster facilement la température de compoundage pour obtenir un matériau transparent, en règle générale il suffit d'augmenter la température de compoundage par exemple vers 280 ou 290°C.

Les compositions de l'invention peuvent comprendre des stabilisants, des antioxydants, des anti UV.

[Exemples]

On a utilisé les produits suivants :

PASA : polyamide semi-aromatique amorphe PA-12/BMACM, TA/BMACM,IA synthétisé par polycondensation à l'état fondu à partir de bis-(3-méthyl-4-aminocyclohexyl)-méthane (BMACM), de lauryllactame (L12) et d'acides iso- et téréphtalique (IA et TA) dans un rapport molaire 1/1/0,3/0,7.

**PA 11** : polyamide 11 de $\overline{Mw}$ 45000 à 55000.

**PA 11 cata** : un polyamide 11 de $\overline{Mw}$ 45 000 à 55 000 et contenant 3700 ppm de catalyseur acide phosphorique.

**PEBA :** un copolymère à blocs PA 12 de $\overline{Mn}$ 5000 et blocs PTMG de $\overline{Mn}$ 650 et de MFI 4 à 10 (g/10 min à 235°C sous 1 kg).

**L3210 :** Lotader®3210 un copolymère éthylène/acrylate de butyle/anhydride maléique de proportions en poids 90 / 7 / 3 de MFI à 190°C sous 2,16 kg compris entre 4 et 6 qui est un copolymère statistique obtenu par catalyse radicalaire haute pression.

**PA 12** : un polyamide 12 de $M_w$ 45 000 à 55 000.

**AX8840** : Lotader®AX8840 un copolymère éthylène- méthacrylate de glycidyle de proportions en poids 92 / 8 de MFI à 190°C sous 2,16 kg compris entre 4 et 6.

**Lyl** : Lotryl®7BA01 un copolymère éthylène/acrylate de butyle de proportions en poids 93/7 et de MFI à 190°C sous 2,16 kg compris entre 0.5 et 2.

**L/Lyl** : un mélange d'**AX8840 et de Lyl** en proportions en poids 25/75. Les résultats sont reportés sur le tableau 2 suivant. Le **polyamide amorphe** (B) est le IPDA, 12 produit de condensation de l'isophorone diamine et de l'acide en C 12. La cristallinité est exprimée par l'enthalpie de fusion divisée par une constante. Le module de flexion est mesuré sur un échantillon conditionné 15 jours à 23°C et 50% RH (humidité relative). La sensation visuelle et la sensation au toucher sont déterminées sur la composition extrudée sous forme de feuille. Dans la colonne "exemples" le No suivi de "c" veut dire que c'est un exemple comparatif.

**Tableau 2**

| exemples | (A) PA semi-cristallin complément à 100% | (B) PA amorphe à motif cycloaliphatique | (C) Polyamide souple | (O) Compatibilisant | (M) Modifiants souples | Transmission lumineuse (660nm, épaisseur 2mm) | T° de compoundage | Tt |
|---|---|---|---|---|---|---|---|---|
| 1 c | PA11 | | PA11 + 25%PASA | | | > 80% | 320 | 185 |
| 2 c | PA11 | 10% | | | | > 50% | <≈270 | 189 |
| 3 | PA11 | 25% | | | | > 60% | <≈270 | 189 |
| 4 | PA11 | 40% | | | | > 80% | <≈270 | 189 |
| 5 | PA11 | 25% | 10% PEBA | | | > 80% | <≈270 | 185 |
| 6 | PA11 | 25% | | | | > 80% | <≈270 | 189 |
| 7 | PA11 | 25% | | | 6% L3210 | > 80% | <≈270 | 189 |
| 8 | PA11 | 25% | 10% PEBA | | 6% AX8840 | > 80% | <≈270 | 189 |
| 9 | PA11 | 25% | 10% PEBA | | 6% L3210 | > 60% | <≈270 | 189 |
| 10 | PA11 | 25% | | | 36% L/Lyl | > 50% | <≈270 | 178 |
| 11 c | PA12 | 25% | | | | > 30% | 270 | |
| 13 c | PA12 | 10% | | 12% PA11cata | | > 60% | <≈270 | 178 |
| 14 | PA12 | 25% | | 12% PA11cata | | > 80% | <≈270 | 178 |
| 15 | PA12 | 25% | | 12% PA11 | | > 80% | <≈300 | |
| 16 | PA12 | 25% | 10% PEBA | 12% PA11cata | | > 80% | <≈270 | |
| 17 | PA12 | 25% | | 12% PA11cata | 6% L3210 | > 60% | <≈270 | |
| 18 | PA12 | 25% | 10% PEBA | 12% PA11cata | 6% L3210 | > 80% | <≈270 | |
| 19 | PA12 | 25% | 10% PEBA | 12% PA11cata | 6% L3210 | > 80% | <≈270 | |
| 20 | PA12 | 25% | 10% PEBA | 12% PA11cata | 36% L/Lyl | > 60% | <≈270 | |

## Tableau 2 (suite)

| exemples | (A) PA semi-cristallin complément à 100% | (B) PA amorphe à motif cycloaliphatique | (C) Polyamide souple | (D) Compatibilisant | (M) Modifiants souples | Cristallinité | Module de flexion | Adhésion sur substrat | sensation visuelle | sensation toucher |
|---|---|---|---|---|---|---|---|---|---|---|
| 1 c | PA11 + 25%PASA | | | | | 19% | 1350 | • | | |
| 2 c | PA11 | 10% | | | | 22% | 1100 | non | | |
| 3 | PA11 | 25% | | | | 22% | 1250 | | | |
| 4 | PA11 | 40% | | | | 21% | 1350 | | | |
| 5 | PA11 | 25% | 10% PEBA | | | 21% | 1250 | oui | mat | |
| 6 | PA11 | 25% | | | 6% L3210 | 21% | 1250 | oui | brillant | |
| 7 | PA11 | 25% | | | 6% AX8840 | 21% | 1250 | oui | mat | |
| 8 | PA11 | 25% | 10% PEBA | | 6% L3210 | 21% | 1150 | | | |
| 9 | PA11 | 25% | 10% PEBA | | 36% L/Lyl | 21% | 600 | non | | doux |
| 10 | PA12 | 25% | | | | 24% | 1200 | | | |
| 11 c | PA12 | 25% | | 12% PA11 cata | | 23% | | | | |
| 13 c | PA12 | 10% | | 12% PA11 cata | | 21% | | | | |
| 14 | PA12 | 25% | | 12% PA11 | | | | | | |
| 15 | PA12 | 25% | 10% PEBA | 12% PA11 cata | | | 1250 | oui | mat | |
| 17 | PA12 | 25% | | 12% PA11 cata | 6% L3210 | | 1250 | oui | mat | |
| 18 | PA12 | 25% | 10% PEBA | 12% PA11 cata | | | 1250 | | | |
| 19 | PA12 | 25% | 10% PEBA | 12% PA11 cata | 6% L3210 | | 1250 | oui | mat | |
| 20 | PA12 | 25% | 10% PEBA | 12% PA11 cata | 36% L/Lyl | | 600 | oui | mat | doux |

## Revendications

1. Composition transparente comprenant en poids, le total étant 100%:

    • 5 à 40% d'un polyamide amorphe (B) contenant des motifs cycloaliphatiques mais pas de motifs aromatiques qui résulte de la condensation:

    ➢ soit d'au moins une diamine choisie parmi les diamines cycloaliphatiques et les diamines aliphatiques et d'au moins un diacide choisi, parmi les diacides cycloaliphatiques et les diacides aliphatiques, l'un au moins des motifs diamines ou diacides étant cycloaliphatique,
    ➢ soit d'un acide alpha oméga amino carboxylique cycloaliphatique,
    ➢ soit d'une combinaison de ces deux possibilités,
    et éventuellement d'au moins un monomère choisi parmi les acides alpha oméga amino carboxyliques ou les éventuels lactames correspondants, les diacides aliphatiques et les diamines aliphatiques,

• 0 à 40% d'un polyamide souple (C) choisi parmi les copolymères à blocs polyamides et blocs polyéthers et les copolyamides,
• 0 à 20% d'un compatibilisant (D) de (A) et (B),
• 0 à 40% d'un modifiant souple (M),
• avec la condition que (C)+(D)+(M) est compris entre 0 et 50%,
• le complément à 100% d'un polyamide (A) semi cristallin,

dans laquelle le terme "transparent" correspond à un coefficient de transmission lumineuse supérieur ou égal à 50 %, mesuré à 560 nm et pour une épaisseur de 2 mm.

2. Composition selon la revendication 1 dans laquelle (A) provient de la condensation d'un lactame ayant au moins 9 atomes de carbone, d'un acide alpha oméga amino carboxylique ayant au moins 9 atomes de carbone ou d'une diamine et d'un diacide tels que la diamine ou le diacide ont au moins 9 atomes de carbone.

3. Composition selon la revendication 1 ou 2 dans laquelle (A) est le PA 11 ou le PA 12.

4. Composition selon l'une quelconque des revendications précédentes dans laquelle (A) est un polyamide équilibré.

5. Composition selon l'une quelconque des revendications précédentes dans laquelle la diamine cycloaliphatique du polyamide amorphe (B) est l'isophorone diamine.

6. Composition selon l'une quelconque des revendications précédentes dans laquelle (C) est un copolymère à blocs polyamides et blocs polyéthers.

7. Composition selon la revendication 6 dans laquelle le copolymère à blocs polyamides et blocs polyéthers est constitué de blocs PA 6 ou PA 12 et les blocs polyéthers sont en PTMG.

8. Composition selon l'une quelconque des revendications 1 à 5 dans laquelle (C) est un copolyamide.

9. Composition selon l'une quelconque des revendications précédentes dans laquelle (A) est le PA 12 et (D) le PA 11.

10. Composition selon l'une quelconque des revendications précédentes dans laquelle le compatibilisant (D) est un polyamide catalysé.

11. Composition selon l'une quelconque des revendications précédentes dans laquelle (A) est le PA 12 et (D) le PA 11 catalysé.

12. Composition selon l'une quelconque des revendications précédentes dans laquelle le modifiant souple (M) est choisi parmi les copolymères éthylène-polypropylène (EPR), EPDM greffés par l'anhydride maléique, les copolymères éthylène-(méth)acrylate d'alkyte-anhydride maléique, ces derniers copolymères mélangés avec des copolymères de l'éthylène et d'un (méth)acrylate d'alkyle.

13. Composition selon l'une quelconque des revendications 1 à 12 dans laquelle les proportions des constituants sont les suivantes (le total étant 100%) :

le complément à 100% de (A),
20 à 30% de (B),
0 à 40% de (C),
0 à 20% de (D),
0 à 40% de (M),
(C)+(D)+(M) étant compris entre 0 et 50%.

14. Composition selon l'une quelconque des revendications 1 à 12 dans laquelle les proportions des constituants sont les suivantes (le total étant 100%) :

le complément à 100% de (A),

5 à 40% de (B),
0 à 30% de (C),
0 à 20% de (D),
0 à 30% de (M),
(C)+(D)+(M) étant compris entre 0 et 30%.

**15.** Composition selon l'une quelconque des revendications 1 à 12 dans laquelle les proportions des constituants sont les suivantes (le total étant 100%) :

le complément à 100% de (A),
10 à 30% de (B),
0 à 30% de (C),
0 à 20% de (D),
0 à 30% de (M),
(C)+(D)+(M) étant compris entre 0 et 30%.

**16.** Composition selon l'une quelconque des revendications 1 à 12 dans laquelle les proportions des constituants sont les suivantes (le total étant 100%) :

le complément à 100% de (A),
20 à 30% de (B),
0 à 30% de (C),
0 à 20% de (D),
0 à 30% de (M),
(C)+(D)+(M) étant compris entre 0 et 30%.

**17.** Composition selon l'une quelconque des revendications 1 à 12 dans laquelle les proportions des constituants sont les suivantes (le total étant 100%) :

le complément à 100% de (A),
10 à 30% de (B),
0 à 20% de (C),
0 à 20% de (D),
0 à 20% de (M),
(C)+(D)+(M) étant compris entre 0 et 20%.

**18.** Composition selon l'une quelconque des revendications 1 à 12 dans laquelle les proportions des constituants sont les suivantes (le total étant 100%) :

le complément à 100% de (A),
10 à 30% de (B),
0 à 15% de (C),
0 à 15% de (D),
0 à 15% de (M),
(C)+(D)+(M) étant compris entre 5 et 15%.

**19.** Composition selon l'une quelconque des revendications 1 à 12 dans laquelle les proportions des constituants sont les suivantes (le total étant 100%) :

le complément à 100% de (A),
20 à 30% de (B),
0 à 20% de (C),
0 à 20% de (D),
0 à 20% de (M),
(C)+(D)+(M) étant compris entre 0 et 20%.

**20.** Composition selon l'une quelconque des revendications 1 à 12 dans laquelle les proportions des constituants sont les suivantes (le total étant 100%) :

le complément à 100% de (A),
20 à 30% de (B),
0 à 15% de (C),
0 à 15% de (D),
0 à 15% de (M),
(C)+(D)+(M) étant compris entre 5 et 15%.

21. Objets constitués d'une composition selon l'une quelconque des revendications précédentes tels que les plaques, les films, les feuilles, les tubes, les profilés, les objets obtenus par injection, et en particulier les films et les feuilles qu'on colle ensuite sur les skis.

22. Objets selon la revendication 21 qui sont décorés, par exemple par sublimation, et recouverts d'une couche de protection transparente constituée de la composition selon l'une quelconque des revendications 1 à 20.

**Claims**

1. Transparent composition comprising, by weight, the total being 100%:

   • 5 to 40% of an amorphous polyamide (B) containing cycloaliphatic units but no aromatic units, which results from the condensation:

   ➢ either of at least one diamine chosen from cycloaliphatic diamines and aliphatic diamines and of at least one diacid chosen from cycloaliphatic diacids and aliphatic diacids, at least one of these diamine or diacid units being cycloaliphatic,
   ➢ or of a cycloaliphatic $\alpha,\omega$-aminocarboxylic acid,
   ➢ or of a combination of these two possibilities, and
   ➢ optionally of at least one monomer chosen from $\alpha,\omega$-aminocarboxylic acids or the possible corresponding lactams, aliphatic diacids and aliphatic diamines,

   • 0 to 40% of a supple polyamide (C) chosen from copolymers containing polyamide blocks and polyether blocks and copolyamides,
   • 0 to 20% of a compatabilizer (D) for (A) and (B),
   • 0 to 40% of a supple modifier (M),
   • with the condition that (C)+(D)+(M) is between 0 and 50%,
   • the remainder to 100% being a semi-crystalline polyamide (A),

   in which the term "transparent" corresponds to a coefficient of light transmission of greater than or equal to 50%, measured at 560 nm and for a thickness of 2 mm.

2. Composition according to Claim 1, in which (A) is derived from the condensation of a lactam containing at least 9 carbon atoms, an $\alpha,\omega$-aminocarboxylic acid containing at least 9 carbon atoms or a diamine and a diacid such that the diamine or the diacid contain at least 9 carbon atoms.

3. Composition according to Claim 1 or 2, in which (A) is PA-11 or PA-12.

4. Composition according to any one of the preceding claims, in which (A) is an equilibrated polyamide.

5. Composition according to any one of the preceding claims, in which the cycloaliphatic diamine of the amorphous polyamide (B) is isophoronediamine.

6. Composition according to any one of the preceding claims, in which (C) is a copolymer containing polyamide blocks and polyether blocks.

7. Composition according to Claim 6, in which the copolymer containing polyamide blocks and polyether blocks consists of PA-6 or PA-12 blocks and the polyether blocks are PTMG blocks.

8. Composition according to any one of Claims 1 to 5, in which (C) is a copolyamide.

9. Composition according to any one of the preceding claims, in which (A) is PA-12 and (D) is PA-11.

10. Composition according to any one of the preceding claims, in which the compatabilizer (D) is a catalysed polyamide.

11. Composition according to any one of the preceding claims, in which (A) is PA-12 and (D) is catalysed PA-11.

12. Composition according to any one of the preceding claims, in which the supple modifier (M) is chosen from ethylene-polypropylene (EPR) copolymers, EPDM copolymers grafted with maleic anhydride, ethylene/alkyl (meth)acrylate/maleic anhydride copolymers, the latter copolymers mixed with copolymers of ethylene and of an alkyl (meth) acrylate.

13. Composition according to any one of Claims 1 to 12, in which the proportions of the constituents are as follows (the total being 100%):

      the difference to 100% of (A),
      20 to 30% of (B),
      0 to 40% of (C),
      0 to 20% of (D),
      0 to 40% of (M),
      (C)+(D)+(M) being between 0 and 50%.

14. Composition according to any one of Claims 1 to 12, in which the proportions of the constituents are as follows (the total being 100%):

      the difference to 100% of (A),
      5 to 40% of (B),
      0 to 30% of (C),
      0 to 20% of (D),
      0 to 30% of (M),
      (C)+(D)+(M) being between 0 and 30%.

15. Composition according to any one of Claims 1 to 12, in which the proportions of the constituents are as follows (the total being 100%):

      the difference to 100% of (A),
      10 to 30% of (B),
      0 to 30% of (C),
      0 to 20% of (D),
      0 to 30% of (M),
      (C)+(D)+(M) being between 0 and 30%.

16. Composition according to any one of Claims 1 to 12, in which the proportions of the constituents are as follows (the total being 100%):

      the difference to 100% of (A),
      20 to 30% of (B),
      0 to 30% of (C),
      0 to 20% of (D),
      0 to 30% of (M)
      (C)+(D)+(M) being between 0 and 30%.

17. Composition according to any one of Claims 1 to 12, in which the proportions of the constituents are as follows (the total being 100%):

      the difference to 100% of (A),
      10 to 30% of (B),
      0 to 20% of (C),
      0 to 20% of (D),

0 to 20% of (M),
(C)+(D)+(M) being between 0 and 20%.

18. Composition according to any one of Claims 1 to 12, in which the proportions of the constituents are as follows (the total being 100%):

the difference to 100% of (A),
10 to 30% of (B),
0 to 15% of (C),
0 to 15% of (D),
0 to 15% of (M),
(C)+(D)+(M) being between 5 and 15%.

19. Composition according to any one of Claims 1 to 12, in which the proportions of the constituents are as follows (the total being 100%):

the difference to 100% of (A),
20 to 30% of (B),
0 to 20% of (C),
0 to 20% of (D),
0 to 20% of (M),
(C)+(D)+(M) being between 0 and 20%.

20. Composition according to any one of Claims 1 to 12, in which the proportions of the constituents are as follows (the total being 100%):

the difference to 100% of (A),
20 to 30% of (B),
0 to 15% of (C),
0 to 15% of (D),
0 to 15% of (M),
(C)+(D)+(M) being between 5 and 15%.

21. Articles consisting of a composition according to any one of the preceding claims, such as plates, films, sheets, tubes or profiles, the articles obtained by injection moulding and in particular the films and sheets which are then bonded to skis.

22. Articles according to Claim 21, which are decorated, for example by sublimation; and coated with a transparent protective layer consisting of the composition according to any one of Claims 1 to 20.

**Patentansprüche**

1. Transparente Zusammensetzung, enthaltend, bezogen auf das Gewicht, wobei sich die Summe auf 100% beläuft:

• 5 bis 40% eines amorphen Polyamids (B), das cycloaliphatische Einheiten, aber keine aromatischen Einheiten enthält und sich aus der Kondensation von:

➢ entweder mindestens einem unter cycloaliphatischen Diaminen und aliphatischen Diaminen ausgewählten Diamin und mindestens einer unter cycloaliphatischen Disäuren und aliphatischen Disäuren ausgewählten Disäure, wobei mindestens eine der Diamin- oder Disäure-Einheiten cyclialiphatisch ist,
➢ oder einer cycloaliphatischen alpha,omega-Aminocarbonsäure
➢ oder einer Kombination dieser beiden Möglichkeiten
➢ und gegebenenfalls mindestens einem unter alpha,omega-Aminocarbonsäuren oder den möglichen entsprechenden Lactamen, aliphatischen Disäuren und aliphatischen Diaminen ausgewählten Monomer ergibt,

• 0 bis 40% eines unter Copolymeren mit Polyamidblöcken und Polyetherblöcken und Copolyamiden ausgewählten flexiblen Polyamids (C),
- 0 bis 20% eines Verträglichkeitsvermittlers (D) für (A) und (B),
- 0 bis 40% eines flexiblen Modifizierungsmittels (M),
- mit der Maßgabe, daß (C)+(D)+(M) zwischen 0 und 50% liegt,
- Rest auf 100% teilkristallines Polyamid (A),

wobei der Begriff "transparent" einem bei 560 nm und für eine Dicke von 2 mm gemessenen Lichtdurchlässigkeitskoeffizienten größer gleich 50% entspricht.

2. Zusammensetzung nach Anspruch 1, worin (A) aus der Kondensation eines Lactams mit mindestens 9 Kohlenstoffatomen, einer alpha,omega-Aminocarbonsäure mit mindestens 9 Kohlenstoffatomen oder einem solchen Diamin und einer solchen Disäure, daß das Diamin oder die Disäure mindestens 9 Kohlenstoffatome enthalten, stammt.

3. Zusammensetzung nach Anspruch 1 oder 2, worin es sich bei (A) um PA-11 oder PA-12 handelt.

4. Zusammensetzung nach einem der vorhergehenden Ansprüche, worin es sich bei (A) um ein ausbalanciertes Polyamid handelt.

5. Zusammensetzung nach einem der vorhergehenden Ansprüche, worin es sich bei dem cycloaliphatischen Diamin des amorphen Polyamids (B) um Isophorondiamin handelt.

6. Zusammensetzung nach einem der vorhergehenden Ansprüche, worin es sich bei (C) um ein Copolymer mit Polyamidblöcken und Polyetherblöcken handelt.

7. Zusammensetzung nach Anspruch 6, worin das Copolymer mit Polyamidblöcken und Polyetherblöcken aus PA-6- oder PA-12-Blöcken aufgebaut ist und die Polyetherblöcke aus PTMG sind.

8. Zusammensetzung nach einem der Ansprüche 1 bis 5, worin es sich bei (C) um ein Copolyamid handelt.

9. Zusammensetzung nach einem der vorhergehenden Ansprüche, worin es sich bei (A) um PA-12 und bei (D) um PA-11 handelt.

10. Zusammensetzung nach einem der vorhergehenden Ansprüche, worin es sich bei dem Verträglichkeitsvermittler (D) um ein katalysiertes Polyamid handelt.

11. Zusammensetzung nach einem der vorhergehenden Ansprüche, worin es sich bei (A) um PA-12 und bei (D) um katalysiertes PA-11 handelt.

12. Zusammensetzung nach einem der vorhergehenden Ansprüche, worin das flexible Modifizierungsmittel (M) ausgewählt ist aus Ethylen-Polypropylen-Copolymeren (EPR), mit Maleinsäureanhydrid gepfropftem EPDM-Copolymeren und Ethylen-Alkyl-(meth)acrylat-Maleinsäureanhydrid-Copolymeren, wobei letztere mit Copolymeren von Ethylen und einem Alkyl(meth)acrylat vermischt sind.

13. Zusammensetzung nach einem der Ansprüche 1 bis 12, worin die Bestandteile in den folgenden Anteilen vorliegen (wobei sich die Summe auf 100% beläuft):

Rest auf 100% (A)
20 bis 30% (B)
0 bis 40% (C)
0 bis 20% (D)
0 bis 40% (M),
wobei (C)+(D)+(M) zwischen 0 und 50% liegt.

14. Zusammensetzung nach einem der Ansprüche 1 bis 12, worin die Bestandteile in den folgenden Anteilen vorliegen (wobei sich die Summe auf 100% beläuft):

Rest auf 100% (A)
5 bis 40% (B)

0 bis 30% (C)
0 bis 20% (D)
0 bis 30% (M),

wobei (C)+(D)+(M) zwischen 0 und 30% liegt.

**15.** Zusammensetzung nach einem der Ansprüche 1 bis 12, worin die Bestandteile in den folgenden Anteilen vorliegen (wobei sich die Summe auf 100% beläuft):

Rest auf 100% (A)
10 bis 30% (B)
0 bis 30% (C)
0 bis 20% (D)
0 bis 30% (M),
wobei (C)+(D)+(M) zwischen 0 und 30% liegt.

**16.** Zusammensetzung nach einem der Ansprüche 1 bis 12, worin die Bestandteile in den folgenden Anteilen vorliegen (wobei sich die Summe auf 100% beläuft):

Rest auf 100% (A)
20 bis 30% (B)
0 bis 30% (C)
0 bis 20% (D)
0 bis 30% (M),

wobei (C)+(D)+(M) zwischen 0 und 30% liegt.

**17.** Zusammensetzung nach einem der Ansprüche 1 bis 12, worin die Bestandteile in den folgenden Anteilen vorliegen (wobei sich die Summe auf 100% beläuft):

Rest auf 100% (A)
10 bis 30% (B)
0 bis 20% (C)
0 bis 20% (D)
0 bis 20% (M),

wobei (C)+(D)+(M) zwischen 0 und 20% liegt.

**18.** Zusammensetzung nach einem der Ansprüche 1 bis 12, worin die Bestandteile in den folgenden Anteilen vorliegen (wobei sich die Summe auf 100% beläuft):

Rest auf 100% (A)
10 bis 30% (B)
0 bis 15% (C)
0 bis 15% (D)
0 bis 15% (M),

wobei (C)+(D)+(M) zwischen 5 und 15% liegt.

**19.** Zusammensetzung nach einem der Ansprüche 1 bis 12, worin die Bestandteile in den folgenden Anteilen vorliegen (wobei sich die Summe auf 100% beläuft):

Rest auf 100% (A)
20 bis 30% (B)
0 bis 20% (C)
0 bis 20% (D)
0 bis 20% (M),

wobei (C)+(D)+(M) zwischen 0 und 20% liegt.

20. Zusammensetzung nach einem der Ansprüche 1 bis 12, worin die Bestandteile in den folgenden Anteilen vorliegen (wobei sich die Summe auf 100% beläuft):

Rest auf 100% (A)
20 bis 30% (B)
0 bis 15% (C)
0 bis 15% (D)
0 bis 15% (M),

wobei (C)+(D)+(M) zwischen 5 und 15% liegt.

21. Gegenstände aus einer Zusammensetzung nach einem der vorhergehenden Ansprüche, wie Platten, Filme, Folien, Rohre und Profile, wobei diese Gegenstände durch Spritzguß erhalten werden, und insbesondere Filme und Folien, die dann auf Skier aufgeklebt werden.

22. Gegenstände nach Anspruch 21, die dekoriert sind, beispielsweise durch Sublimation, und mit einer transparenten Schutzschicht aus der Zusammensetzung nach einem der Ansprüche 1 bis 20 bedeckt sind.